# EUROPEAN PATENT SPECIFICATION

(11) **EP 0 458 858 B1**
(45) Date of publication and mention of the grant of the patent: **23.08.1995**
(21) Application number: 90903447.2
(22) Date of filing: 15.02.1990
(51) Int. Cl.: D03D 49/00, G05B 15/00

(54) **ARRANGEMENT IN A TEXTILE MACHINE, PREFERABLY A WEAVING MACHINE**
ANORDNUNG AN TEXTILMASCHINEN, INSBESONDERE WEBVORRICHTUNG
AGENCEMENT UTILISE DANS UNE MACHINE TEXTILE, TELLE QUE DE PREFERENCE UN METIER A TISSER AUTOMATIQUE

(30) Priority: 16.02.1989 SE 8900537
(43) Date of publication of application: 04.12.1991
(73) Proprietor: IRO AB, S-523 01 Ulricehamn (SE)
(72) Inventor: FREDRIKSSON, Lars-Berno, S-511 57 Kinna (SE)
(74) Representative: Grünecker, Kinkeldey, Stockmair & Schwanhäusser Anwaltssozietät
(86) International application number: PCT/SE90/00098
(87) International publication number: WO 90/09474

(56) References cited:
- EP-A- 0 256 519
- US-A- 3 817 059

## Description

The invention relates to an apparatus according to the preamble part of claim 1.

One of the functions which have to be controlled and supervised in a weaving machine is the tension of the weft yarn during the weaving procedure. The tension can be modified by means of yarn brakes. This is useful in weaving machines e.g like in rapier- or gripper-weaving machines, which are able to initiate 800-1200 picks/minute.

In a controlling and supervising system for a weaving machine group according to EP 0 302 364 A2, subordinate computers are connected within a network to a host computer providing data files for various units and devices. The subordinate computer group comprises personal computers which load received data into the various units and devices via the network. Controllers are installed between the weaving machines and the supervisory personal computers for operating and controlling the weaving machine on the basis of data from the supervisory personal computer and for controlling access to input of signals from the weaving machines and data for use in the operation and control of such equipment. Each weaving machine is adapted to then operate by itself independently of the network. It is thus possible to employ distributed processing after the data is down-loaded. Various types of sensors and similar devices monitor the operating conditions. The system is so designed that the signals from the sensors and similar devices are fed back via controllers to the personal computers.

The weaving machine and its feed elements represent a large number of functions which have to be individually controlled and supervised and have to be mutually inter-related to achieve an optimum functioning of the weaving machine. The supervising and/or controlling system must be able to work rapidly and functionally reliably. Considering the large amount of information and the requirement for accuracy of the information, the transmission in the computerized system must take place accurately and with such speed that events which have occurred in the system are detected sufficiently rapidly in the places where the events which have occurred are to be acted upon in some respect. For each transmission case, the principle which applies is that a sequence of events is to be carried out. This sequence must be synchronized, which can be achieved with the aid of, a run initiation or trigger signal which gives rise to a certain sequence being carried out in the system, and, an acknowledgement signal which issues acknowledgement that an effected sequence is performed. An acknowledgement signal may directly initiate a new run. Alternatively, acknowledgements can be collected at a suitable place in the system in order to initiate a new run.

An apparatus according to the invention is characterized principally in that each unit is connected or connectable to a connection which forms part of a network at which message transmission within the system takes place, and in that the respective element or unit is concerned with its weft yarn in the machine, in order to supervise and/or control weft yarn parameters as eg the weft yarn tension.

The invention is as claimed in Claim 1, with further embodiments in Claims 2-14.

The messages transferred between the units in the network system can be ranked from the point of view of priority. Different types of messages are transmitted with different priorities. This can be achieved so that time-critical messages are not obstructed by other less important messages. In one embodiment, each message is relatively short. An important message is therefore not obstructed by a long and/or unimportant message. Faults can be detected in the transmission with the aid of parity bits and control bits which form part of the message. Some form of confirmation may be utilized. Optical transmission may be utilized.

A digital communication protocol with standardized mechanical and electrical characteristics can be used. This opens up the possibility that any unit or element can be connected together with any other, provided that it satisfies standardization requirements. In many cases, the connected units can thus be used directly with a central computer which configures the system. In other cases, it may be a case of modification in the respective unit so that this comprises the command which is transmitted on the network in a correct manner.

Transmission takes place via a serial connection so that an asynchronous process is carried out in time. Collision between simultaneous transmissions must be avoided, which is achieved by prioritization. Two logic level can be utilized at the connection, one of which is dominant and the other non-dominant. Irrespective how many units transmit a bit which is non-dominant, a dominant bit will be received if a unit transmits a dominant bit at the same time. When a unit starts to transmit, this is detected by all connected units within a predetermined time. So it is ensured that the digital levels of the communication remain stable at the moment when the units read off the bit from the communication. Each unit furthermore interrupts its transmission immediately it detects that the transmission is occupied by one which is transmitting a dominant bit when the unit itself is transmitting a non-dominant bit.

Each unit can comprise a communication control part with at least one first micro-computers or advanced digital circuits and is connected to a second micro-computer or advanced digital circuit. The different communication control parts of the feed elements can thus function with one another and/or with one or more control elements (e.g. main computer) in the system via the digital and serial connection which thus functions as a data bus between the communication control parts or between the communication control parts and the elements.

The units comprise communication control parts with connection interfaces to the connection (data bus connection), and, microcomputers for control or supervision of the functions of the feed elements. The serial bit flow effected at the serial connection proceeds in the form of messages which respectively comprise a frame and a data part. Said frames comprise bits which are divided up for the transmission and reception functions of the system, e.g. for synchronization, encoding etc. The units can be close to or in the respective element. The units or their communication control parts are individually interchangeable with one another.

A predetermined message type, which is attributable to trigger signals has, at the digital and serial connection, priority over other messages. Exchange of a message belonging to said type takes place immediately after completion of a message of a second message type. The bit speed is selected so that said short times for exchange of a message of the first type are available. Times within the range 0.1-1.0 ms are preferably used in this respect. Bit speeds of e.g. 1 MHz/sec can be used.

The units may work with a feedback function. Each unit can take care of the control function for the associated feed element which can thus be provided with or interact with one or more units which feedback stepwise or continuously a parameter change caused within the control function, e.g. change in movement, state etc.

A yarn tension control system is provided for the feed elements to assure optimum yarn brake functions.

In the drawings is :
- Figure 1: a skeleton diagram of a part of a weaving machine with a computerized system for control and supervision,
- Figure 2: a first type of message,
- Figure 3: another type of message,
- Figure 4: a block diagram, of the connection of two units to connection, means;
- Figures 4a-7: in diagram form, signal trains, attributable to three different units,
- Figure 8: a block diagram of a modified constructions of units,
- Figure 9: a first embodiment of a weft yarn tension control system, and
- Figure 10: a second embodiment of a weft yarn tension control system.

In a weaving machine (e.g. rapier/gripper, projectile-type) one or more yarn feeding paths exist. Each yarn is controlled and/or supervised by monitor - and/or control devices. The devices are adapted to create a signal representative to the yarn tension. A unit receives the signal and generates control signals. If operation parameter change the yarn tension can be modified. The control signals may be generated when the tension falls below or rises above a predetermined tension.

The devices interact and decide the yarn speed between a yarn spool and a yarn feed element. The speed is kept on a predetermined maximum rate value, which can be selected +/-20% of the ideal value. A control unit connected to the weaving machine distributes control signals via the communication means (serial communication) to the devices or even the weaving machine.

Respective data units (microprocessors) include program functions for different operation applications in the machine. Each brake can be controlled by one or more microprocessors which effect intermittent or continuous signals for the brakes during the picks of the weaving machine. The signals can be initiated from the weaving machine and/or mutually from the concerned yarn feed elements.

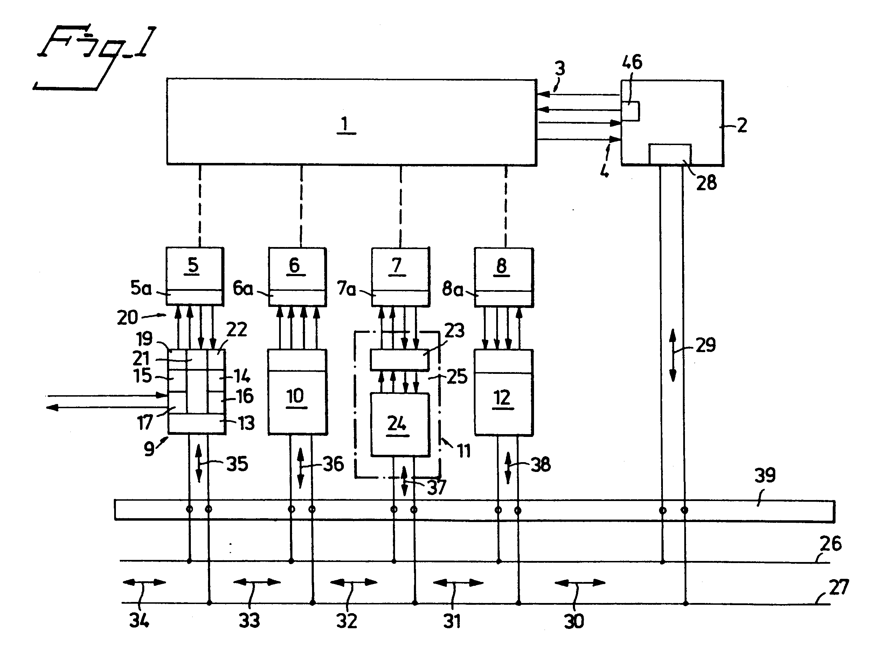

In Figure 1, a weaving machine 1 is provided with a controlling and/or supervising computer system 2. The connections of the system to the machine have been symbolized with 3 and the connections of the machine to the system with 4. Feeders 5, 6, 7 and 8 are connected to the weaving machine 1. Each feeder has electrical connection parts 5a, 6a, 7a and 8a and a function control unit 9, 10, 11 and 12. Each unit can be located close to or on the feeder and comprises at least one first micro-computers (or advanced digital circuits) 13, 14 for serial bit flow processing. Memory circuit 15 (RAM, ROM) and a clock circuit 16 are included. There can also be circuits for time logic, fault processing etc. To a communication port 17 read-in and read-out elements can be connected via connections 18 for entering and retrieval of information for programming etc. Each unit is connected to a second micro-computer 19 effecting operation and supervision of the feeder. The second micro-computer carries out calculations for optimum control and supervision via connection 20. The second micro-computer 19 comprises peripherals as memory circuits 21, communication circuits 22 etc. A connection interface comprises A/D and D/A circuits, communication terminals, pulse outputs etc. The second micro-computer 19 can be integrated in the unit 9 or alternatively constitute - as also shown - a separate unit. The second micro-computer 23 can be connected to a separate communication control part 24 similar to unit 9, apart from the second micro-computer 19, with associated peripherals 21, 22. A connection interface 25 serves for parallel communication. The units 9-12 can be constructed with identical, or essentially identical, connection interfaces so that any unit can take the place of another unit, at least after a minor adjustment. In cases where a separate communication control part 24 exists in all units, these can be individually interchangeable in corresponding manner. Each unit 9-12 is connected to a two-wire connection 26, 27 for serial message transmission. Also system 2 is connected with connection 26, 27 and comprises at least one control computer 28 (e.g. supervising computer) for the units 9-12. Units 9-12 can alternatively be arranged for reciprocal communication. Two-way or one-way exchanges of messages between the control computer and the units or between the units are symbolized by arrows 29-38. The computer systems can work in parallel or with a supervising and subordinate system. Each unit can be provided with more than one part 13, and each part 13 is connected to its part system. Two connected units can internally communicate via a separate or the main connection.

The connection of units and/or control elements to the digital connection 26, 27 (a data bus) is made by terminal elements 39 which can be a pair of screws. Each message comprises e.g. a frame part and a data part. The messages can be executed with markings or addresses intended for the units. Each unit then receives and stores its assigned address in the system. The system also may operate with a certain order for the units. With a supervising computer 28, the system can work with a start-up phase, in which control information is issued for selection of feeder functions, e.g. depending upon a programmed or selected weaving pattern, and a working phase in which the selected feeder function or functions are diagnosed, supervised and controlled for optimum function performance etc., and effected. The thread tension can be supervised.

Two or more message types for differing priorities can be utilized. Figure 2 shows a first type of message 40 consisting of a frame part, the length of which is indicated with L. The frame contains different fields, e.g. a start field 40a, a priority field 40b, a control bit field 40c, a total control field 40d, and acknowledgement and completion fields 40e and 40f. The content of the priority field determines the ranking of the message. All messages appearing at the connection are mutually ranked, instantaneous signals or trigger signals being attributed the highest priority and normal communication then having priority according to the time requirement. Pick signals, yarn break signals, arrival signals, feeder change signals etc. have the highest priorities, while transmission of information regarding the long-term operation in the textile machine has lower priority.

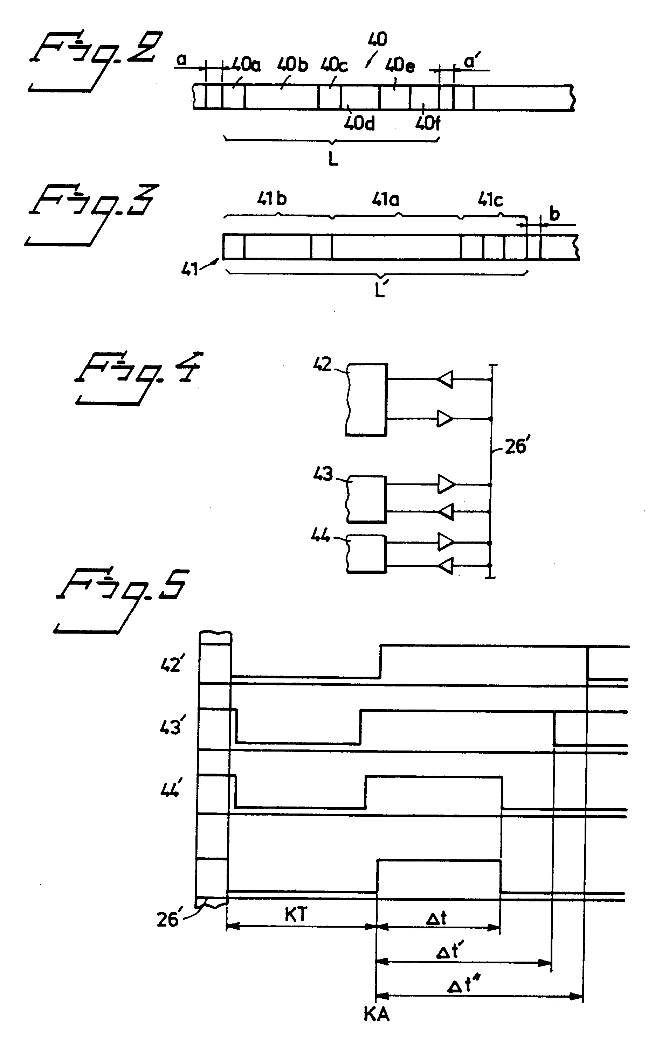

A second message type 41 according to Figure 3 has a data field 41a. The frame part in message 41 consists of fields 41b and 41c. Data field 41a contains information which is to be transmitted between units.

The communication transmission works bit-synchronously in priority selection. The messages have relatively short lengths L and L'. A message of lower ranking does not obstruct a message of higher ranking for any length of time. The message length L' can be selected in the order of magnitude 0.05 - 0.1 ms (at 1 Mbit/sec). The distances a, a' and b are selected with great accuracy. Bit speeds of e.g. 1 Mbit/sec or higher, e.g. 4 Mbit/sec, are utilized.

Two different types of logic levels can be used, the first level being a dominant level consisting of "0", the second level being a non-dominant level "1". By said two levels, prioritization and fault detection are possible. If one or more units transmit a dominant level, this will be received in the communication, irrespective of how many units are transmitting non-dominant levels. As a bit fault appears in the communication 100% faults are detected, because the transmitting unit registers that faults occur when the bit emerges in the communication. Local faults occuring in the receiving unit) are detected as follows: If more than five bits are faults, detection takes place to 100%. This applies irrespective of how the faults are spread in the message. If the number of faulty bits is odd, detection also always takes place. Other faults (2 or 4 faulty bits) are detected with a probability of 1/33000. The transmission of a bit is effected by means of the transmitted bit being divided up into five parts. The first part is a synchronizing part which normally starts the bit. The second part consists of an increase part (time increase part), with which the bit is increased in the event of resynchronization. A third part relates to a first delay part which is attributable to a time interval, during which a stable level is obtained. At the end of this time, the value of the bit is read off. The fourth part consists of a second delay part, which forms a time interval in order that the circuit may determine internally whether it is the current unit which is to transmit the coming bit and which bit is to be transmitted in such a case. The fifth part is attributable to a reduction part which can be removed in the event of resynchronization. In cases where the communication part concerned cannot work entirely alone, it can use a micro-processor.

Units which want access to the connection start to transmit their messages as soon as there is a free space at the connection. Messages with lower priority are interrupted and the message with the highest priority is completed. All units read the transmitted message and are adjusted to receive an assigned message and, to carry out the function in question or pick up an actual information. Acknowledgement can take place in different ways. A receiving unit can e.g. transmit an acknowledgement bit when it considers it has received a correct message. Another possibility is that the receiving unit answers with a message. The receiving unit can alternatively transmit a special acknowledgement message.

Any transmission is an asynchronous process which is carried out serially in time. Collisions between two different messages are prevented. Prioritization can be made in the transmitted message. So any unit can transmit to any unit without problems. All connected units are capable to detect within a fixed time period when a unit starts to transmit. It is thus ensured that the digital levels in the communication can be made stable at the moment when the units are reading off the bit from the communication. Another requirement is that each unit interrupts transmission as soon as it detects that the current transmission comprises a message with a dominant bit which the unit itself is transmitting a non-dominant bit. In normal cases, transmitting units start transmission in a random manner in time, which makes it extremely improbable that two units start to transmit simultaneously (within 100 - 300 ns at a bit frequency of 1 MHz). If transmissions start simultaneously, a selection is made by the prioritization. The problem arises when the transmitting unit cannot transmit because the connection is occupied. When the connection becomes free, the probability is very high that there will be several messages waiting in turn to transmit and that all start transmissions. Then, as soon as a message is completed, all units must start transmission in an interval which is approximately 10% of the bit period, which means that all units must start their transmission within the same 100 - 300 ns at a bit frequency of 1 MHz. This latter requirement is prescribed preferably in order that a unit with low priority does not start transmitting somewhat earlier than one with high priority and thus cannot occupy the connection. This can also be used for prioritization. A manner of ordering priority is thus that after a completed message, the units receive different delay times before they start transmission. The unit having the highest priority has a short delay time. Those with low priority have to wait longer.

The waiting time can be 148 »s (2 x 111 bits) plus the time it takes to process the information. The minimum transmission time is half of the maximum. By means of only allowing, at sensitive moments, transmission of messages without data, this time can be reduced to 62 »s. All calculations are made with a bit frequency of 1.5 Mbit/sec and on the assumption that the transmitted message has the highest priority. The system can interrupt transmission by transmitting a fault frame, which is transmitted automatically when faults are discovered in the communication Then all units interrupt reading-in and disregard all informations. By transmitting such a signal, the message in progress can be interrupted and an important message can be transmitted directly afterwards. This reduces the response time to a maximum of 44 and a minimum of 40 »s.

For messages which comprise a predetermined number of bits with the same level in succession, the transmission - protocol works with a bit which is inverse and follows the predetermined number (e.g. 5). The inverse bit can optionally form part of the message. Interference is thus prevented from locking the connection. In the event of faults, all units transmit e.g. six dominant bits in succession as a sign that they have perceived the fault. All units then transmit e.g. six non-dominant bits. With this, the communication is restored and each unit is ready to or can start transmitting. Each unit which received the faulty message discards it and the unit which sent the message from the start resends. By these means, speeding up of alarm messages is brought about.

Figure 4 shows the connection of three units 42, 43 and 44 to the connection 26'. The following table shows a priority selection in a first example. The design of the priority field in the message can be seen in the table. The message of unit 44 has most dominant bits.

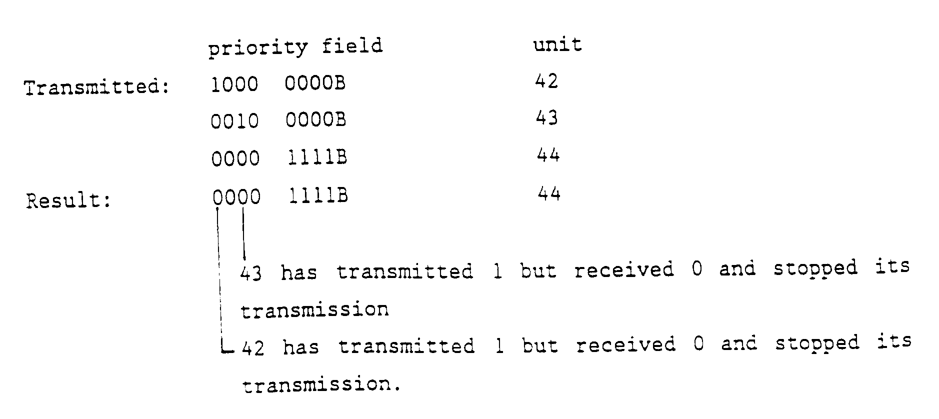

Figure 4 shows that the unit transmits its respective bits and reads the levels which are received in the communication.

In Figure 4a prioritization takes place in one part of the message. A "1" indicates a non-dominant level and a "0" a low but dominant level. B1, to B8 indicate bit spaces. When unit 42 compares the transmitted bit in the space B1 with the state received in the communication, it notes that the non-dominant bit has been overwritten by a dominant one, and, therefore, interrupts transmission. At bit space B3 unit 43 makes the same observation. At bit space B8 unit 44 notes that it had highest priority since it never had to interrupt its transmission. Unit 44 consequently completes the message. The message can consist of both "0" and "1" even though only "0" are shown in the examplary embodiment. The prioritization process can use more or fewer bits than shown.

Figure 5 shows collision detection for units 42', 43' and 44' which have different waiting times Δt, Δt' and Δt'' after collision. Unit 42' which is assigned the longest waiting time (Δt'') receives priority, whereas the other units have to wait.

Figure 5 shows signals occuring in a system with three units colliding. In the event of simultaneous starts, a respective unit may not detect that another unit is transmitting simultaneously. After a short time interval, the transmitting unit indicate that their transmission is colliding and carries out a fault detection in order to complete the message and to indicate to other units that the transmission has collided. The completion is carried out such that all units transmit sequences of dominant bits overlapping one another so that a clear and marked completion of the collision can be detected by all units. From a time KA, all units wait a predetermined time. The unit with the highest priority waits the shortest time before it starts to transmit. The units with lower priority wait longer and indicate that the connection is occupied, for which reason the units concerned have to wait until the communication becomes free.

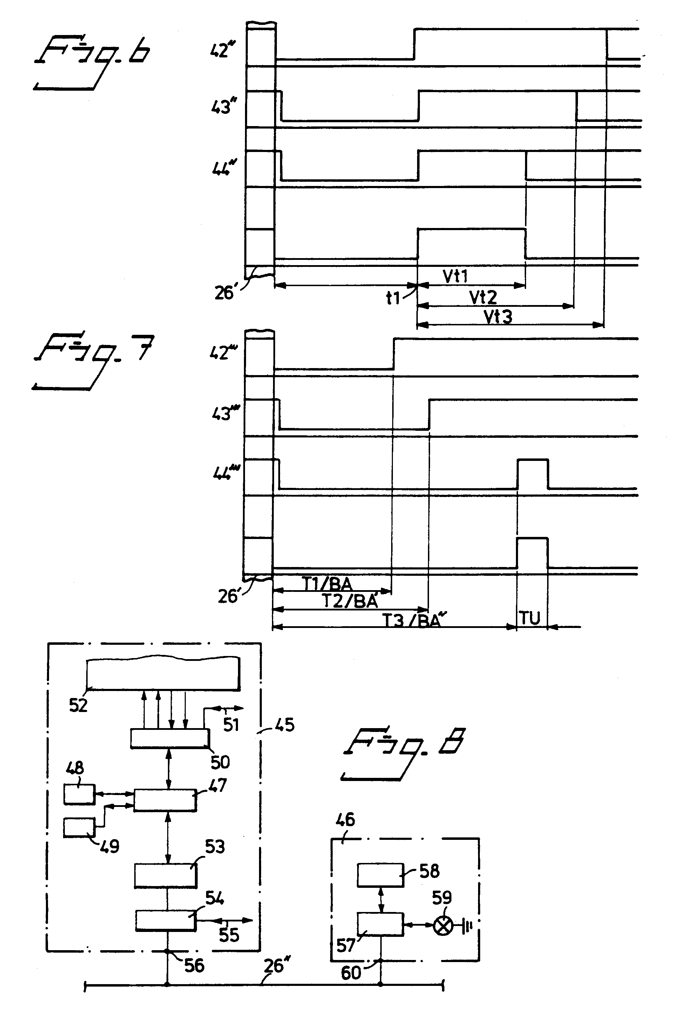

Figure 6 shows a mechanically guided collision detection where dominant levels are first transmitted in order to make clear that the units wish to transmit. The Units 42'', 43'' and 44'' are assigned different waiting times vt1, vt2 and vt3, after all units have finished transmitting the dominant bits. The Unit (42'') with the shortest waiting time (vt1) gains priority. The edges of the pulse trains must be kept to the time t1 with great accuracy (e.g. 100 nanosec).

Figure 6 is similar to Figure 5. The functions differ since the units in Figure 6 do not start to transmit messages without starting transmitting the sequence which indicates a collision. A collision is thus signalled irrespective of whether any other unit is transmitting or not. The prioritization takes place as in Figure 5. The advantage of Figure 6 is a constant delay, and that the collision indication is not needed. The prioritization takes time even if there is only one unit which wants to transmit.

Figure 7 shows priority selection for units 42''', 43''' and 44'''. The starting point is the number of bits BA, BA' and BA'' or times T1, T2 and T3 respectively in the message. The message for the unit (44''') with the greatest number (BA'') receives the transmission state. The start sequence is used for prioritization. The length of the start sequence varies. The unit with the longest start sequence is the last to stop its start sequence and has highest priority. After prioritization, time TU expires for the unit to clarify that it is itself which is to transmit. Prioritization times T1, T2 and T3 are so different in length that they can never be mixed up with one another.

Figure 8 shows differing units 45 and 46. Unit 45 being highly intelligent. Unit 46 being of a simpler type. Unit 45 has a microcomputer 47 connected to memory areas 48, 49, e.g. in the form of RAM or ROM memories. Micro-computer 47 works into a connection interface 50 comprising D/A and A/D converters. Also included are counters, pulse outputs and pulse inputs. The Connection interface 50 can be provided with a communication terminal 51 to electromechanical part 52 of an element of the textile machine. Microcomputer 47 interacts with communication part 53 comprising one or more micro-computers or advanced circuits. A circuit 54 with inputs and outputs 55 configureing unit 45 can be included. Unit 45 is connected via output 56 to digital connection 26''. Unit 46 consists of a communication part 57 connected to one or more transmitter elements 58 and one or more indication elements 59 and/or execution elements 59', and has an output 60 to connection 26'.

The system controls operation of yarn brakes of the feed elements in an intermittent manner. In a first embodiment the control device is responsible for two positions or conditions of the brake, i.e. a braking position and a non-braking position. The trigger signals in the system can be used for each brake which is actuated in dependence from the trigger signals.

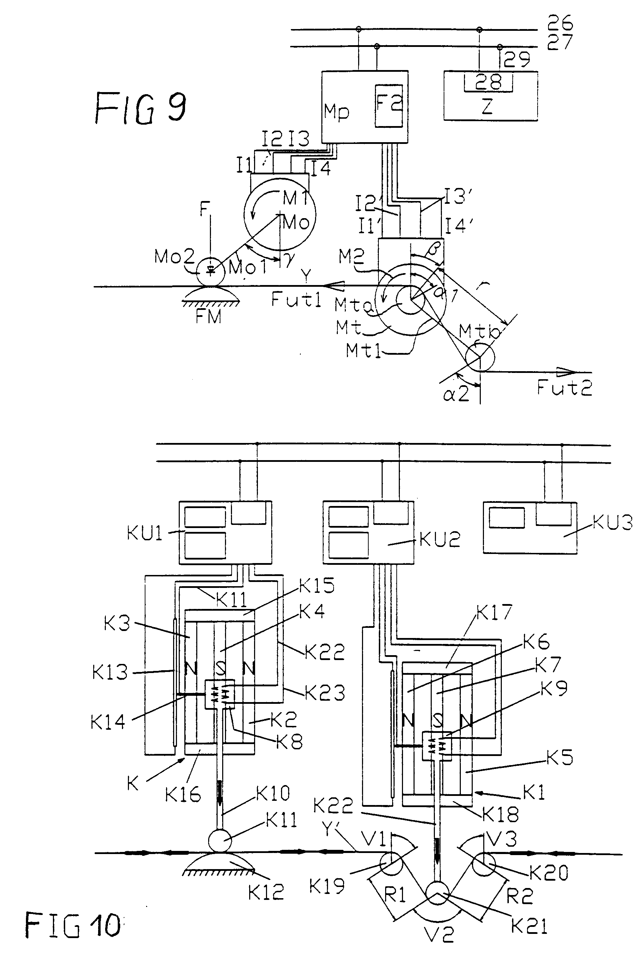

The serial protocol as disclosed also allows controlling complex brake functions. Accordingly it is intended to control a yarn brake e.g. on the exit side of a feed element. The brake regulates the yarn tension during the pick time. For instance, in a gripper looms (not shown) there is a need for a specific minimum yarn tension when the grip device catches the yarn. The braking force for the yarn in a first part of the brake is attained from (compare Figure 10).${\text{F}}_{\text{ut2}} {\text{= F}}_{\text{ut1}} {\text{* e}}^{\text{»α}}$ » = coefficient of friction
α = angle.

This type of brake amplifies the incoming tension. In a second part of the brake ("leaf-brake") the braking force is attained from${\text{F}}_{\text{ut1}} \text{= »F + force in yarn in front of the brake.}$

This kind of brake is not sensitive for incoming disturbances.

By combining the first and second parts of the brake an advanced controlled brake, see Fig. 10 is possible. The first part of the brake contains a motor M1 of the type LAT (= Limited Angle Torque motor), the shaft of which is movable for a predetermined angle, for instance ± 90°. Such motors are very rapid. The angular acceleration can be for example about 10⁵-10⁹, preferably 10⁷ rad/s². The mentioned motor effects a given torque M in a certain angle β. The value of the torque is related to the force (compare Fig. 10),${\text{F}}_{\text{ut2}} \text{≈ M/(r * sin (β))}$ The force Fᵤₜ₂ is linearly proportional in relation to the applied torque M if force F is fed back to keep the angle β constant. By varying torque M it is possible to control the yarn tension during the pick. It is also possible to vary the torque M with the angular speed β', by means of which dynamical factors can be compensated. It is also possible to even apply a negative torque -M when force F is released. The yarn tension can in such a way rapidly be decreased to a minimum. The angle ( $\text{α = α₁ + α₂}$ ) is dependent of the angle β so that the system can be designed for a very rapid response.

The combined brake (Fig. 10) has a microprocessor mP (unit) of its own and gets or exchanges data information from or with the weaving machine Z via communication 26, 27 (see Fig. 1). First data signals are related to a first value of the friction coefficient » and set up a table (F2) for the desired yarn tension Fᵤₜ₂ as function of the angle of the weaving machine in the weaving cycle. The tension control system is able to give the machine information about actual value of coefficient », difference in thread thickness, etc., the value of which can be extruded from the mesured values of the torque M (= M1 and/or M2) and angle(-s) β, γ, said value can be extruded from or decided by means of the motor current.

Second signals indicate the cycle angle of the weaving machine Z. At least one trigger - signal is needed. A modern weaving maching of the gripper type works with 600 r/min, i.e. 10 Hz. The yarn is drawn in under about half a turn and the yarn rate varies approximately sinusoidally with two half periods at the frequency of 20 Hz. The brakes are controlled coarsely with at least 200 Hz and smoothly with 2 kHz, which presents good characteristics for the control operation of the brakes. The trigger signals have to operate with delays below 2 ms (corresponds to 500 Hz). In Fig. 10 motor Mo effects torque M1 on its shaft Mo1 which is provided with or connected to member Mo2, which can be turnable or fixed. Torque M1 causes force F against member FM, which is preferably fixed. The Yarn Y runs between members Mo2 and FM. Force F causes a desired friction for the yarn. Angle γ is the angle of shaft Mo1. Motor Mo is controlled by microprocessor unit mP including table F2. Conductor 1₁ transfers an actual value signal for angle γ ; 1₂ a reference value signal for angle; 1₃ an actual value signal of torque M₁ ; 1₄ a reference value signal of torque M₂.

Further motor Mt has a wheel on its shaft symbolised with Mta. Member Mta can alternatively be separated and is then preferably fixed. Motor Mt provides torque M2. A member Mtb is related to Mt via a rocker lever Mt1 so that member Mtb is turnable by Mt with fixed centrum distance r between members Mt1 and Mtb. The Turn angle is β. Members Mt1 and Mtb are preferably provided with cylindrical envelope surfaces around which the yarn runs. Member Mtb is preferably not rotatable relative the yarn. The yarn is in frictional engagement with parts of said surfaces. Said parts are indiated with α₁ and α₂. 1₁' transfers an actual value signal for angle β ; 1₂' a reference value signal for β ; 1₃' an actual value signal for M₂. By said values the motors Mo, Mt and the torques M₁, M₂ can be precisely controlled. If friction of the yarn tends to be to high at said surfaces the friction at Mo2 and FM can be decreased and vice versa by feeding the friction status from the one friction effecting point to the other and vice versa. The combined brake (yarn tension control system) can effect the optimum yarn brake operation during the weaving procedure. The tension control system works with an inherent friction measuring function. The reference values are calculated by the microprocessor in concert with the table F2 and actual values of angle β and the currents which correspond to the torques M1 and M2.

The above mentioned mathematical expressions are valid for a fixed arrangement of Mo2, Mt1 and Mtb. Their friction surfaces may have friction layers of diamond, metal, metal oxide, ceramics. Said material show high friction coefficients, are able to conduct heat away, are durable against wear, etc.

The tension control system is intended for adaption at the inlet or exit side of a feed element. The yarn is running from the left to the right in Fig. 10. A change in tension Fut2 causes changes of angle β against the torque M₂. The control system responses very fast to the tension change and is able to take a condition which in each moment is balanced against the occuring value of force Fut2.

In a weaving machine with one or more yarn feeding paths the yarns are processed by yarn feed elements, yarn brakes and monitors for the yarn. The yarn feeding operation is data controlled. The control system includes data units (microprocessors) which are mutually connected via a serial communication. The brakes, feed elements, monitors, etc. follow programs which control the operations. The brakes are adapted to be controlled by their units so they effect controlled yarn tension at the inlets and/or outlets of the feed elements. In an embodiment the monitor device effects real indications of speed changes of the yarn so that a respective monitor device does not indicate a yarn break with speed changes. Each brake effects, in dependence of the control signals from the units, a predetermined low and optimum yarn speed which ensures an even yarn tension in the yarn on the spool body of the feed element. The feed element and the brake effect small speed changes in the yarn feeding paths between the spool and the feed element. The yarn store range on respective feed element can be checked controllably.

A data communication connection with a few wires is utilized, e.g. with two wires for the signal transmission and access to earth (earth conductor) and a screened conductor which prevents interference into and out of the system.

Fig. 10 shows a yarn tension control system (combined brake) comprising linear motor devices K an K1. Each device comprises a permanent magnet arrangement including elongated iron core members K2, K3, K4 and K5, K6 and K7. A movable coil member K8, K9 is guided on member K4 respective K7 and is movable in the longitudinal direction in relation to said member K4, K7. Members K2, K3 and K5, K6 are north poles and member K4, K7 is south pole. The movable coil is attached to actuating member K10 including member K11 which urges the yarn Y' against support in order to cause frictional engagement for said yarn. The coil member K8, K9 interacts with a sensor arrangement for indicating the displacement position of the coil on core member K4, K7 and the displacement position of member K11 in relation to support K12. The sensor arrangement includes a potentiometer interacting with shunt member K14 attached to the movable coil. The value of a signal Ki1 depends on the displacement position of the coil in relation to the potentiometer. The signal Ki1 has its lowest value in the lower coil position in Fig. 10 and its highest value in the highest coil position. The permanent magnets, which include core members K2, K3, K4 respective K5, K6, K7 and further core members K15, K16 and K17, K18, effects a magnetic field, in which coil member K8, K9 is displacable in the length direction of elongated core member K4, K7 by means of current signals Ki2, Ki3.

Linear motor device K1 operates in the same way as device K. The yarn Y' runs over three cylindrical members K19, K20 and K21, the latter one is applied on arm K22. The yarn engages the members K19, K20 and K21 at angles V1, V2, and V3. Their values depend on the relative displacement of members K19, K20 and K21. In the shown embodiment member K 21 is displaceable in relation members K19, K20. The members K19, K20, K21 (and also K11 and K12) can be provided with peripherical grooves in order to guide the yarn.

Each linear motor device K and K1 is served by a unit KU1, Ku2. A master unit is designed with Ku3. The yarn tension system is controllable by the applied currents effected by the units. The brakes of Figs 9 and 10 are able to generate a controlled tension force which varies during the weaving procedure and is kept to a minimum value during the whithe procedure. Forces are increased and decreased during the procedure. The brake K generates a supplementary force which is proportional to the squeeze force in the above second expression and a supplementary part which amplifies the force by deflecting the yarn over one or more bent or curved surfaces. By varying the squeeze force and deflecting angle the brake force can be controlled to the desired value. There is an advantage in arranging a squeeze brake part in the first position (Fig 10) so that the supplementary force in this brake part is independent from the yarn tension in front of the brake. In the second brake part the force is proportional to the incoming force. A further advantage of two brake steps in the two brake parts is that member K21 is able to move upwards at yarn accelerations and in such a way that the force can be kept very low.

The lateral elasticity of the yarn, (thickness of the yarn) can be measured by member K14 which measures the distance between members K11 and K12 at the same time as the force is measured. In such a way different information can be gained in order to attain continous conrol of the yarn quality. The force variations at a certain distance between members K11, K12 can be studied and knowledge of the uneveness of the yarn can be extracted. If the irregularities appear on determined distances the yarn speed can be measured by means of the time periods between force peaks. If two squeeze brake parts are arranged with a determined distance speed measuring can take place by correlation of the force related signals. Member K1 can be force controlled and then a rapid adjustment of the yarn force can be achieved. The function of the combined brake of Fig. 9 is similar. The squeeze force is attained by the rocking movement of member Mo2. The deflection angle in two steps is attained by means of rocking rotation of Mtb, which rotation is effected by rocker arm Mt1 with torque M2.

## Claims

1. Apparatus for controlling and supervising a plurality of operational elements with the aid of a computerized system in which the operational elements collectively form part of a weaving machine (Z), the computerized system including a plurality of function control units (9-12,MP,KU1,KU2,KU3) which individually control at least one of said plurality of operational elements and which together form a network,
**characterised in that**
the network includes a connection means (26,27) to which each said function control unit (9-12, MP,KU1,KU2) is connected for effecting digital and serial data transmission between said respective function control units of the weaving machine (Z), and
that each of said operational elements comprises a yarn tension control system to control the tension of a weft yarn (Y,Y') disposed along a respective weft yarn path in the weaving machine (Z).

2. Apparatus as in claim 1, **characterised in that** the yarn tension control system includes means (Mt,K1) for deflecting the weft yarn (Y,Y') and means (Mo,K) for applying an additional frictional force (F) to the weft yarn, and that the function control unit (MP,KU1,KU2) is operatively coupled to the weft yarn deflecting means (Mt,K1) and the additional frictional force applying means (Mo,K).

3. Apparatus as in claim 2, **characterised in that** the weft yarn deflecting means (Mt,K1) additionally serves to sense the tension of the weft yarn, and that the additional frictional force (F) bearing on the weft yarn is variable by the function control unit ((Mp KU1,KU2) in response to the sensed tension and in response to control messages from the function control unit.

4. Apparatus as in claims 1 to 3, **characterised in that** in the yarn tension control system, the means for applying an additional frictional force to the weft yarn is a controllable squeeze-brake and the means for deflecting the weft yarn is a controllable deflection brake, both brakes acting in running direction of the weft yarn physically close to another on the weft yarn (Y,Y'), both brakes having individual first and second control motors (Mo,Mt,K,K1) connected to at least one function control unit (Mp;KU1,KU2),
the squeeze-brake having a first stationary yarn contacting member (FM,K12) with a yarn contacting surface at one side of the weft yarn path and a first movable yarn contacting member (K11,Mo2) with a yarn contacting surface at the other side of the yarn path and in alignment with the first stationary yarn contacting member perpendicularly with respect to the yarn path,
the first movable yarn contacting member (K11,Mo2) being coupled for relative lateral movements with the first control motor (K,Mo),
the deflection brake having at least one second stationary yarn contacting member (Mta;K19,K20) with a yarn contacting surface on one side of the yarn path and a second movable yarn contacting member (Mtb;K21) at the opposite side of the yarn path and distant in yarn running direction from the second stationary yarn contacting member (K19,K20,Mta), the second movable yarn contacting member (K21,Mtb) having a yarn contacting surface and being adapted to be moved laterally with respect to the yarn path and in relation to the second stationary yarn contacting member (Mta,K19,K20) for deflecting the yarn with a variable deflection angle (β,α2;V1,V2,V3) around said yarn contacting surfaces, the second movable yarn contacting member being coupled with the second control motor (K1,Mt).

5. Apparatus as in claim 4, **characterised in that** the first and second control motors (Mo,Mt) are limited angle torque (LAT) motors and that each of the first and second movable yarn contacting members (Mo2,Mtb) is coupled with the one respective control motor (Mo,Mt) by means of a rocker arm (Mo1,Mt1) which is swivable about the axis of the control motor with a controlled torque (M1,M2).

6. Apparatus as in claim 4, **characterised in that** the first and second control motors (K,K1) are linear motors or loud-speaker coil motors, each having an acutating member (K10,K22) which is movable essentially perpendicularly and linearly with respect to the yarn path, and that the first and second movable yarn contacting members (K11,K21) are mounted to the respective actuating member for upward and downward movements with the respective actuating member (K10,K22).

7. Apparatus as in claims 4 to 6, **characterised in that** the first and second movable yarn contacting members (Mo2,Mtb,K11,K21) and the second stationary yarn contacting member (Mta,K19,K10) are provided with a cylindrical yarn contacting surface.

8. Apparatus as in claims 4 to 7, **characterised in that** at least one of the first and second movable yarn contacting members (Mo2,Mtb,K11,K21) it turnable with its cylindrical yarn contacting surface with respect to the weft yarn.

9. Apparatus as in claims 4 to 7, **characterised in that** at least one of the first and second movable yarn contacting members (Mo2,Mtb,K11,K21) is non-rotatable with respect to the weft yarn.

10. Apparatus as in at least one of claims 1 to 7, **characterised in that** the second stationary yarn contacting member (Mta) is provided on the shaft of the second control motor (Mt) and is turnable with respect to the weft yarn.

11. Apparatus as in at least one of claims 1 to 7, **characterised in that** the second stationary yarn contacting member (Mta) is arranged separately from the shaft of the second control motor (Mt) and is fixed non-rotatably with respect to the weft yarn.

12. Apparatus with respect to claim 3, **characterised in that** a friction force adjustment signal message is transmittable to the control motor (Mo) in response to an angular or linear displacement of the second movable yarn contacting member (Mtb,K21).

13. Apparatus as in at least one of claims 1 to 12 **characterised in that** at least one of the yarn contacting surfaces is made from a friction generating material from the group consisting of diamonds, metal, metal oxide or ceramics.

14. Apparatus as in at least one of claims 1 to 12, **characterised in that** the function control unit contains a microprocessor (Mp).

15. Apparatus as in at least one of claims 1 to 12, **characterised in that** the tension sensing means and the friction force applying means are separately connected to own function control units (KU1,KU2) and that for both control units (KU1,KU2), a common function control master unit (KU3) is provided.

## Patentansprüche

1. Vorrichtung zum Steuern und Überwachen einer Vielzahl operativer Elemente mit Hilfe eines computerisierten Systems, in dem die operativen Elemente gemeinsam einen Teil einer Webmaschine (Z) formen, und wobei das computerisierte System eine Vielzahl von Funktionssteuereinheiten (9-12, MP, KU1, KU2, KU3) umfaßt, die individuell zumindest eines der Vielzahl der operativen Elemente steuert und die miteinander ein Netzwerk formen,
**dadurch gekennzeichnet,**
daß das Netzwerk Anschlußeinrichtungen (26, 27) umfaßt, an denen jede der Funktionssteuereinheiten (9-12, MP, KU1, KU2) zum Bewirken einer digitalen und seriellen Datenübertragung zwischen den jeweiligen Funktionssteuereinheiten der Webmaschine (Z) angeschlossen ist,
und daß jedes operative Element ein Fadenspannungs-Steuersystem zum Steuern der Spannung eines Schußfadens (Y, Y') aufweist, das entlang des jeweiligen Schußfaden-Wegs in der Webmaschine (Z) angeordnet ist.

2. Vorrichtung nach Anspruch 1, **dadurch gekennzeichnet,** daß das Fadenspannungs-Steuersystem Einrichtungen (Mt, K1) zum Umlenken des Schußfadens (Y, Y') sowie Einrichtungen (Mo, K) zum Aufbringen einer zusätzlichen Reibungskraft (F) auf den Schußfaden aufweist, und daß die Funktionssteuereinheit (MP, KU1, KU2) operativ mit den Schußfaden-Umlenkeinrichtungen (Mt, K1) und den Einrichtungen (Mo, K) zum Aufbringen der zusätzlichen Reibungskraft gekoppelt ist.

3. Vorrichtung nach Anspruch 2, **dadurch gekennzeichnet,** daß die Umlenkeinrichtungen (Mt, K1) für den Schußfaden zusätzlich dazu dienen, die Spannung des Schußfadens abzutasten, und daß die zusätzliche Reibungskraft (F), die auf den Schußfaden einwirkt, durch die Funktionssteuereinheit (Mp KU1, KU2) variabel ist in Abhängigkeit von der abgetasteten Spannung und in Abhängigkeit von Steuernachrichten der Funktionssteuereinheit.

4. Vorrichtung nach den Ansprüchen 1 bis 3, **dadurch gekennzeichnet,** daß in dem Fadenspannungs-Steuersystem die Einrichtungen zum Aufbringen einer zusätzlichen Reibungskraft auf den Schußfaden eine steuerbare Klemm-Bremse und die Einrichtungen zum Umlenken des Schußfadens eine steuerbare Umlenkungsbremse sind, wobei beide Bremsen in Laufrichtung des Schußfadens physikalisch eng beieinander auf den Schußfaden (Y, Y') einwirken und beide Bremsen individuelle erste und zweite Steuermotoren (Mo, Mt, K, K1) aufweisen, die mit wenigstens einer Funktionssteuereinheit (Mp, KU1, KU2) verbunden sind,
daß die Klemm-Bremse ein erstes stationäres Fadenkontaktglied (FM, K12) mit einer Fadenkontaktfläche an einer Seite des Schußfadenwegs und ein erstes bewegliches Fadenkontaktglied (K11, Mo2) mit einer Fadenkontaktfläche an der anderen Seite des Schußfadenweges und in Ausrichtung auf das erste stationäre Fadenkontaktglied senkrecht bezüglich des Fadenweges aufweist,
wobei das erste bewegliche Fadenkontaktglied (K11, Mo2) für relative Querbewegungen mit dem ersten Steuermotor (K, Mo) gekoppelt ist,
wobei die Umlenkungsbremse wenigstens ein zweites stationäres Fadenkontaktglied (Mta, K19, K20) mit einer Fadenkontaktfläche an einer Seite des Fadenwegs und ein zweites bewegliches Fadenkontaktglied (Mtb, K21) an der gegenüberliegenden Seite des Fadenweges und in Fadenlaufrichtung beabstandet zum zweiten stationären Fadenkontaktglied (K19, K20, Mta) aufweist, wobei das zweite bewegliche Fadenkontaktglied (K21, Mtb) eine Fadenkontaktfläche besitzt und so ausgebildet ist, daß es sich quer bezüglich des Fadenweges und in Relation zum zweiten stationären Fadenkontaktglied (Mta, K19, K20) zum Umlenken des Fadens mit einem variablen Umlenkungswinkel (β, α2, V1, V2, V3) um die Fadenkontaktflächen bewegbar ist, wobei das zweite bewegliche Fadenkontaktglied mit dem zweiten Steuermotor (K1, Mt) gekoppelt ist.

5. Vorrichtung nach Anspruch 4, **dadurch gekennzeichnet,** daß die ersten und zweiten Steuermotoren (Mo, Mt) LAT-Motoren (mit winkelbezogen begrenztem Drehmoment) sind, und daß jedes der ersten und zweiten beweglichen Fadenkontaktglieder (Mo2, Mtb) jeweils mit dem einen Steuermotor (Mo, Mt) unter Vermittlung eines Schwenkarms (Mo1, Mt1) gekoppelt ist, der um die Achse des Steuermotors mit einem steuerbaren Drehmoment (M1, M2) schwenkbar ist.

6. Vorrichtung nach Anspruch 4, **dadurch gekennzeichnet,** daß die ersten und zweiten Steuermotoren (K, K1) Linearmotoren oder Motoren mit Lautsprecherspulen sind, von denen jeder ein Betätigungsglied (K10, K22) aufweist, das im wesentlichen senkrecht und geradlinig in bezug auf den Fadenweg beweglich ist, und daß die ersten und zweiten beweglichen Fadenkontaktglieder (K11, K21) an dem jeweiligen Betätigungsglied zu Aufwärts- und Abwärtsbewegungen mit dem jeweiligen Betätigungsglied (K10, K22) montiert sind.

7. Vorrichtung nach den Ansprüchen 4 bis 6, **dadurch gekennzeichnet,** daß die ersten und zweiten beweglichen Fadenkontaktglieder (Mo2, Mtb, K11, K21) und die zweiten stationären Fadenkontaktglieder (Mta, K19, K10) mit einer zylindrischen Fadenkontaktfläche ausgestattet sind.

8. Vorrichtung nach den Ansprüchen 4 bis 7, **dadurch gekennzeichnet,** daß wenigstens einer der ersten und zweiten beweglichen Fadenkontaktglieder (Mo2, Mtb, K11, K21) mit seiner zylindrischen Fadenkontaktfläche in bezug auf den Schußfaden verdrehbar ist.

9. Vorrichtung nach den Ansprüchen 4 bis 7, **dadurch gekennzeichnet,** daß wenigstens einer der ersten und zweiten beweglichen Fadenkontaktglieder (Mo2, Mtb, K11, K21) in bezug auf den Schußfaden nicht verdrehbar ist.

10. Vorrichtung nach wenigstens einem der Ansprüche 1 bis 7, **dadurch gekennzeichnet,** daß das zweite stationäre Fadenkontaktglied (Mta) auf der Welle des zweiten Steuermotores (Mt) angeordnet und in bezug auf den Schußfaden drehbar ist.

11. Vorrichtung nach wenigstens einem der Ansprüche 1 bis 7, **dadurch gekennzeichnet,** daß das zweite stationäre Fadenkontaktglied (Mta) getrennt von der Welle des zweiten Steuermotors (Mt) angeordnet und in bezug auf den Schußfaden nicht-drehbar fixiert ist.

12. Vorrichtung nach Anspruch 3, **dadurch gekennzeichnet,** daß unter Ansprechen auf ein winkelbezogenes oder lineares Versetzen des zweiten beweglichen Fadenkontaktglieds (Mtb, K21) eine Einstell-Signal-Nachricht für die Reibungskraft an den Steuermotor (Mo) übermittelbar ist.

13. Vorrichtung nach wenigstens einem der Ansprüche 1 bis 12, **dadurch gekennzeichnet,** daß wenigstens eine der Fadenkontaktflächen aus einem reibungserzeugenden Material einer Gruppe hergestellt ist, die aus Diamanten, Metall, Metalloxiden oder Keramik bestehen.

14. Vorrichtung nach wenigstens einem der Ansprüche 1 bis 12, **dadurch gekennzeichnet,** daß die Funktionssteuereinheit wenigstens einen Mikroprozessor (Mp) enthält.

15. Vorrichtung nach wenigstens einem der Ansprüche 1 bis 12, **dadurch gekennzeichnet,** daß die die Spannung abtastenden Einrichtungen und die Einrichtungen zum Aufbringen der zusätzlichen Reibungskraft getrennt mit eigenen Funktionssteuereinheiten (KU1, KU2) verbunden sind, und daß für die beiden Steuereinheiten (KU1, KU2) eine gemeinsame Master-Funktionssteuereinheit (KU3) vorgesehen ist.

## Revendications

1. Appareil pour commander et surveiller une pluralité d'éléments fonctionnels à l'aide d'un système par ordinateur dans lequel les éléments fonctionnels forment collectivement une partie d'une machine textile (Z), le système par ordinateur incluant une pluralité d'unités de commande de fonction (9-12, MP, KU1, KU2, KU3) qui commandent individuellement au moins l'un de ladite pluralité d'éléments fonctionnels et qui forment ensemble un réseau,
caractérisé en ce que :
le réseau inclut un moyen de connexion (26, 27) auquel chaque dite unité de commande de fonction (9-12, MP, KU1, KU2) est connectée pour réaliser une transmission de données numériques et série entre lesdites unités de commande de fonction respectives de la machine texte (Z) ; et en ce que
chacun desdits éléments fonctionnels comprend un système de commande de tension de fil pour commander la tension d'un fil de trame (Y, Y') disposé le long d'une voie de fil de trame respective dans la machine textile (Z).

2. Appareil selon la revendication 1, caractérisé en ce que le système de commande de tension de fil inclut un moyen (Mt, K1) pour dévier le fil de trame (Y, Y') et un moyen (Mo, K) pour appliquer une force de friction supplémentaire (F) au fil de trame et en ce que l'unité de commande de fonction (MP, KU1, KU2) est couplée en fonctionnement au moyen de déviation de fil de trame (Mt, K1) et au moyen d'application de force de friction supplémentaire (Mo, K).

3. Appareil selon la revendication 2, caractérisé en ce que le moyen de déviation de fil de trame (Mt, K1) permet en outre de détecter la tension du fil de trame et en ce que la force de friction supplémentaire (F) appliquée sur le fil de trame est amenée à varier par l'unité de commande de fonction (Mp, KU1, KU2) en réponse à la tension détectée et en réponse à des messages de commande provenant de l'unité de commande de fonction.

4. Appareil selon les revendications 1 à 3, caractérisé en ce que, dans le système de commande de tension de fil, le moyen d'application d'une force de friction supplémentaire au fil de trame est un dispositif de serrage-freinage commandable et le moyen de déviation du fil de trame est un frein de déviation commandable, les deux freins opérant suivant une direction d'avancée du fil de trame en étant physiquement proches l'un de l'autre sur le fil de trame (Y, Y'), les deux freins comportant des premier et second moteurs de commande individuels (Mo, Mt, K, K1) connectés à au moins une unité de commande de fonction (Mp ; KU1, KU2) ;
le moyen de serrage-freinage comportant un premier élément de contact de fil stationnaire (FM, K12) muni d'une surface de contact de fil au niveau d'un côté de la voie de fil de trame et un premier élément de contact de fil mobile (K11, Mo2) muni d'une surface de contact de fil au niveau de l'autre côté de la voie de fil, en alignement avec le premier élément de contact de fil stationnaire, perpendiculairement à la voie de fil ;
le premier élément de contact de fil mobile (K11, Mo2) étant couplé pour des déplacements latéraux relatifs avec le premier moteur de commande (K, Mo) ;
le frein de déviation comportant au moins un second élément de contact de fil stationnaire (Mta ; K19, K20) muni d'une surface de contact de fil sur un côté de la voie de fil et un second élément de contact de fil mobile (Mtb ; K21) au niveau du côté opposé de la voie de fil à une certaine distance, suivant une direction d'avancée de fil, par rapport au second élément de contact de fil stationnaire (K19, K20, Mta), le second élément de contact de fil mobile (K21, Mtb) comportant une surface de contact de fil et étant conçu pour être déplacé latéralement par rapport à la voie de fil en relation avec le second élément de contact de fil stationnaire (Mta, K19, K20) pour dévier le fil selon un angle de déviation variable (β, α2 ; V1, V2, V3) autour desdites surfaces de contact de fil, le second élément de contact de fil mobile étant couplé au second moteur de commande (K1, Mt).

5. Appareil selon la revendication 4, caractérisé en ce que les premier et second moteurs de commande (Mo, Mt) sont des moteurs couples à angle limité (LAT) et chacun des premier et second éléments de contact de fil mobiles (Mo2, Mtb) est couplé à l'un respectif des moteurs de commande (Mo, Mt) au moyen d'un bras de basculement (Mo1, Mt1) qui peut osciller autour de l'axe du moteur de commande selon un couple commandé (M1, M2).

6. Appareil selon la revendication 4, caractérisé en ce que les premier et second moteurs de commande (K, K1) sont des moteurs linéaires ou des moteurs à enroulement du type pour haut-parleur dont chacun comporte un élément d'actionnement (K10, K22) qui est mobile essentiellement perpendiculairement et linéairement par rapport à la voie de fil et en ce que les premier et second éléments de contact de fil mobiles (K11, K21) sont montés sur l'élément d'actionnement respectif pour des déplacements vers le haut et vers le bas par rapport à l'élément d'actionnement respectif (K10, K22).

7. Appareil selon les revendications 4 à 6, caractérisé en ce que les premier et second éléments de contact de fil mobiles (Mo2, Mtb, K11, K21) et le second élément de contact de fil stationnaire (Mta, K19, K10) sont munis d'une surface de contact de fil cylindrique.

8. Appareil selon les revendications 4 à 7, caractérisé en ce qu'au moins l'un des premier et second éléments de contact de fil mobiles (Mo2, Mtb, K11, K21) peut tourner de telle sorte que sa surface de contact de fil cylindrique tourne par rapport au fil de trame.

9. Appareil selon les revendications 4 à 7, caractérisé en ce qu'au moins l'un des premier et second éléments de contact de fil mobiles (Mo2, Mtb, K11, K21) est non tournant par rapport au fil de trame.

10. Appareil selon au moins l'une des revendications 1 à 7, caractérisé en ce que le second élément de contact de fil stationnaire (Mta) est prévu sur l'arbre du second moteur de commande (Mt) et peut tourner par rapport au fil de trame.

11. Appareil selon au moins l'une des revendications 1 à 7, caractérisé en ce que le second élément de contact de fil stationnaire (Mta) est agencé séparément de l'arbre du second moteur de commande (Mt) et est fixé de façon non tournante par rapport au fil de trame.

12. Appareil selon la revendication 3, caractérisé en ce qu'un message de signal de réglage de force de friction peut être transmis au moteur de commande (Mo) en réponse à un déplacement angulaire ou linéaire du second élément de contact de fil mobile (Mtb, K21).

13. Appareil selon au moins l'une des revendications 1 à 12, caractérisé en ce qu'au moins l'une des surfaces de contact de fil est réalisée en un matériau de génération de friction pris parmi le groupe comprenant des diamants, un métal, un oxyde de métal ou des céramiques.

14. Appareil selon au moins l'une des revendications 1 à 12, caractérisé en ce que l'unité de commande de fonction contient un microprocesseur (Mp).

15. Appareil selon au moins l'une des revendications 1 à 12, caractérisé en ce que le moyen de détection de tension et le moyen d'application de force de friction sont connectés séparément à des unités de commande de fonction propres (KU1, KU2) et en ce que, pour les deux unités de commande (KU1, KU2), une unité maître de commande de fonction (KU3) est prévue.
